# EUROPEAN PATENT SPECIFICATION

(11) **EP 1 386 447 B1**
(45) Date of publication and mention of the grant of the patent: **15.06.2005**
(21) Application number: 02712989.9
(22) Date of filing: 04.04.2002
(51) Int. Cl.: H04L 12/14, H04L 12/66, H04Q 7/22

(54) **METHOD OF GENERATING CHARGING DATA IN A DATA NETWORK, AND A DATA NETWORK**
VERFAHREN ZUR ERZEUGUNG VON ABRECHNUNGSDATEN IN EINEM DATENNETZWERK UND DATENNETZWERK
PROCEDE POUR PRODUIRE DES DONNEES DE CHARGEMENT DANS UN RESEAU DE DONNEES, ET RESEAU DE DONNEES

(30) Priority: 05.04.2001 FI 20010713
(43) Date of publication of application: 04.02.2004
(73) Proprietor: TeliaSonera Finland Oyj, 00510 Helsinki (FI)
(72) Inventor: YLI-KORHONEN, Jukka, FIN-90120 Oulu (FI); JUNTUNEN, Ari, FIN-90520 Oulu (FI); KEINÄNEN, Kimmo, FIN-90500 Oulu (FI)
(74) Representative: Antila, Harri
(86) International application number: PCT/FI2002/000288
(87) International publication number: WO 2002/082724

(56) References cited:
- EP-A1- 1 014 619
- EP-A2- 1 085 443
- WO-A1-00/46963
- WO-A1-01/69891
- WO-A1-02/21865
- WO-A1-99/33034

## Description

### FIELD OF THE INVENTION

The invention relates to a method of generating charging data in a data network, and to a data network.

### BACKGROUND OF THE INVENTION

A data network refers herein to both the conventional TCP/IP protocol-based internet and a mobile system employing the wireless application protocol (WAP), as well as to third-generation mobile systems, for instance the UMTS (Universal Mobile Telecommunications System), including their Internet connections. The services of the data network can be used by utilising both the conventional internet technology and the WAP technology. The Internet is a worldwide, TCP/IP-based open data network. When taken expansively, the Internet includes the intranet, which is an internal data network of an organisation, and the extranet, which is an inter-organisational data network intended for a restricted group of users. They, too, employ the TCP/IP protocol and the Internet, in its narrow sense, is generally utilised in their implementation. WAP is a protocol specification, by means of which subscriber terminals in a mobile system can use services provided on the Internet, intranet or extranet, which in this context are called WAP services. Third-generation mobile systems refer to advanced digital, broadband network-based systems intended for worldwide use. One such system is the European UMTS based on WCDMA (Wideband Code Division Multiple Access) technology.

Internet services are typically used through a telecommunications connection provided by an Internet connection provider and a server used for the connection. WAP services are typically used through a WAP gateway maintained by a WAP connection provider. The term connection provider is used herein for both an Internet connection provider and a WAP connection provider. A connection provider refers herein to an operator providing a portal, an operator providing a connection, and an operator providing a charging service.

internet services can be used based on either the conventional request-response (pull) technology or push technology. In the request-response technology, a service request from a subscriber terminal is identified at a node of a network system and forwarded to a content server providing the requested service, after which response data generated in the content server on the basis of the service request is forwarded to the subscriber terminal. In the push technology, a server transmits data to a subscriber terminal on the basis of a request made once by the user without a transmission request related to an individual transmission. WAP services are today used mainly by employing the request-response technology, but services based on the push technology are also being introduced for a wider use. If required, further information can be found on the home page of WAP Forum working on the WAP specification at http://www.wapforum.org.

Billing for the use of WAP services is typically based on the connection time used for data transmission. If the bi-directional data transmission connection between the subscriber terminal and network part of a mobile system is a circuit-switched connection, for instance a data call connection, connection time-based charging is a natural charging method. The problem with this is that it is difficult to divide the billed amount of money between the different services or service entities used during a specific connection time.

Billing for the use of Internet services is typically based on an agreement signed between the user and the content provider, on the basis of which a fixed monthly charge, for instance, is defined for the use of the service. In addition, the connection provider charges the user for the used telecommunications connection according to a separate agreement. A problem with this system is for instance that the user needs to sign agreements with several different parties to be able to use different service entities and the Internet connection.

Billing can also be based on the number of data packets transmitted through a packet-switched connection. If the telecommunications connection between the subscriber terminal and network part of the mobile system is a packet-switched connection, for instance a connection using a short message service (SMS), packet-switched data service, i.e. GPRS (General Packet Radio Service), or UMTS, charging can be done on the basis of the number of the transmitted packets. A drawback of this method is that it is difficult to combine service events belonging to one service entity but provided by different content providers and, on the other hand, to distinguish them from the service events provided by different content providers. Another problem is that the use of one and the same service may require a different number of transactions in different subscriber terminals. In such a case, the users of different subscriber terminals pay a different price for the same service entity when the charging is done on the basis of the number of data packets. Solutions, such as that disclosed in EP 1014619, also exist for charging connections between packet-switched and circuit-switched systems.

For WAP-service billing, event-based charging methods, based on identifying transactions, i.e. individual service events of a service entity, have also been developed. In this regard, reference is made to documents WO 01/69891, WO 00/46963, and EP 1085443. In the request-response technology, a transaction is one request-response pair. A method based on analysing an URL address has earlier been used as such an event-based system, in which the transactions belonging to a given service entity are identified and one of the transactions is selected for charging. A problem with this method is that the transactions related to one service entity cannot be combined, and one of the events must be selected as the charged event. in such a case, a problem arises from processing error situations and from the fact that the number of transactions varies in different subscriber terminals. In an error situation, in which the transaction marked for charging fails, the user is not charged at all for the use of the service entity. Then again, in a situation, in which the user obtains the transaction marked as chargeable but not all transactions belonging to the service entity, the user is charged for an incomplete service entity. Charging in a situation, in which the user interrupts the service, also poses a problem. A further problem of the method is that URL address-based charging requires a great deal of testing and configuration from the charging system, because the URL address of each individual service must be found and configured for charging.

### BRIEF DESCRIPTION OF THE INVENTION

It is an object of the invention to provide an improved method of generating charging data in a data network and an improved data network implementing the method. As one aspect of the invention, the method for generating charging data as claimed in claim 1 is disclosed. As another aspect of the invention, the data network as claimed in claim 30 is disclosed. Other preferred embodiments of the invention are disclosed in the dependent claims.

The invention is based on creating a general-purpose method of identifying individual transactions in a service entity and generating from them one content ticket for each service entity so as to be able to identify, monitor and charge for service entities based on the content ticket.

The invention describes a general method of generating content-based charging data of a service entity, so the need for situation-oriented solutions and configurations is significantly reduced. The solution is reusable, i.e. it can be used in connection with different services and service entities. It can be used in both the conventional TCP/IP-based Internet and a data transmission system employing the wireless application protocol (WAP), as well as in third-generation mobile systems, for instance UMTS (Universal Mobile Telecommunications System), including their Internet connections.

The method and arrangement of the invention are also system or manufacturer-independent, i.e. the node of the used data transmission connection - in the case of a system using the wireless application protocol, the WAP gateway - need not be the hardware of the same system or manufacturer as that in which the content ticket is generated.

A content provider produces service entities whose delivery to the user of a subscriber terminal typically requires several separate transactions. By means of the invention, it is possible to assemble the separate transactions in a content entity together and to charge for the entire service entity instead of individual transactions. Being able to charge for service entities, the connection provider is also better able to assign to each different content provider its share of the charged amount of money, which often presents problems. On account of the invention, the connection provider need not decide which transaction to select for charging, contrary to the transaction-based charging that was applied before.

The content ticket of the invention also enables more versatile charging rules. if the user of a service entity interrupts its use before receiving all parts of the service entity, it is possible to charge for a certain proportion of the price of the service entity on the basis of the content ticket. If, as in the earlier transaction-based charging method, only one transaction was selected from the service entity, on the basis of which the user was charged for the entire service entity, it would be possible that the user was also charged for parts of the service that he did not receive. Or on the other hand, it would be possible that the user was not charged at all for the service, if the user did not receive the transaction that was selected for charging. On the basis of the content ticket, it is also possible not to charge the user for the entire service, if the use of the service entity was interrupted due to reasons beyond the user's control. By means of the content ticket, the user can also be charged based on how far he has proceeded in the service entity. For instance, if the service entity the user is using is a game, in which he proceeds to the second level, where the game ends, the user can be charged less than if he had not proceeded to the second level.

Information on the user of the service, such as MSISDN (Mobile Subscriber International ISDN Number), or the IP address of the subscriber terminal, is always attached to the content ticket of the invention. Other information is also attached to the content ticket, such as the service URL, the name of the service, start and end time, information on the success of the content ticket generation, or information on the success of the individual transactions of the service entity. These enable versatile monitoring and event management.

In the system of the invention, the connection provider can configure the generation rules of the content ticket. This makes it possible for the connection provider to create by means of the method a charging and monitoring system that exactly corresponds to its needs and the current situation. The configuration rules can be created together with the content provider, because the content provider can best define which transactions the service entity consists of. Configuration also includes the definition of the transactions in the service entity that are chargeable, i.e. menus, for instance, can be defined non-chargeable.

The connection provider can define the basis for identifying the transactions, from which the content ticket is generated. This can be done for instance on the basis of the URL or IP address of the content provider or a specific content identifier (content_id) attached to the transaction and defined according to the invention. Likewise, the grounds for identifying the transactions belonging to a content entity of a content provider and to be included into the same content ticket are defined. According to the invention, this can be done for instance by means of a specific content identifier (content_id) attached by the content provider to the transaction. These identifiers can be indicated in key fields added to the header information, for instance http header information, of individual transactions.

The connection provider also adds a specific service platform identifier (serviceplatform_id) to the content ticket for identifying the service platform and content provider from which the transaction originates. This is used to distinguish the contents arriving from different service platforms and content providers, because several content providers may use the same content identifier space. According to the invention, this can be done in such a manner, for instance, that the content provider inserts the service platform identifier (serviceplatform_id) to key fields added to the header information, for instance http header information, of individual transactions.

The use of the content identifier and the service platform identifier is clarified by the example in the following table, in which the service entity consists of providing a three-frame cartoon to a user of the service. In one subscriber terminal, the transmission of the cartoon to the user requires thirteen transactions. In the example, each frame comprises three different frame elements and the header information of the frame.

| Transaction having URL | Content identifier | Service platform identifier |
|---|---|---|
| Common http header info for entire cartoon | 12345 | 99999 |
| Header info for first frame | 12345 | 99999 |
| First frame element of first frame | 12345 | 99999 |
| Second frame element of first frame | 12345 | 99999 |
| Third frame element of first frame | 12345 | 99999 |
| Header info for second frame | 12345 | 99999 |
| First frame element of second frame | 12345 | 99999 |
| Second frame element of second frame | 12345 | 99999 |
| Third frame element of second frame | 12345 | 99999 |
| Header info for third frame | 12345 | 99999 |
| First frame element of third frame | 12345 | 99999 |
| Second frame element of third frame | 12345 | 99999 |
| Third frame element of third frame | 12345 | 99999 |

The content identifier and a possible service platform identifier can also be transmitted to the connection provider separate from the actual transaction data by using a separate signalling channel. In such a case, information on which transaction and subscriber the transmitted identifiers belong to must be added to the identifiers. This can be done for instance by transmitting together with the identifier information a user identifier, for instance MSISDN or IP address, and a transaction identifier, for instance by means of a separate transaction-specific identifier attached to the transactions and identifier information, or by transmitting together with the identifier information time information, by means of which charging information can be combined with status information obtained from the node of the data transmission system, for instance the WAP gateway or http proxy server.

### BRIEF DESCRIPTION OF THE FIGURES

The invention will now be described in greater detail by means of preferred embodiments and with reference to the attached drawings, in which
Figure 1 is a simplified block diagram showing a mobile system employing the wireless application protocol as an example of a data network system,
Figure 2 shows the generation of a content ticket on the basis of transactions,
Figure 3 is a flow chart showing a method of generating charging data in a data network.

### DESCRIPTION OF THE EMBODIMENTS

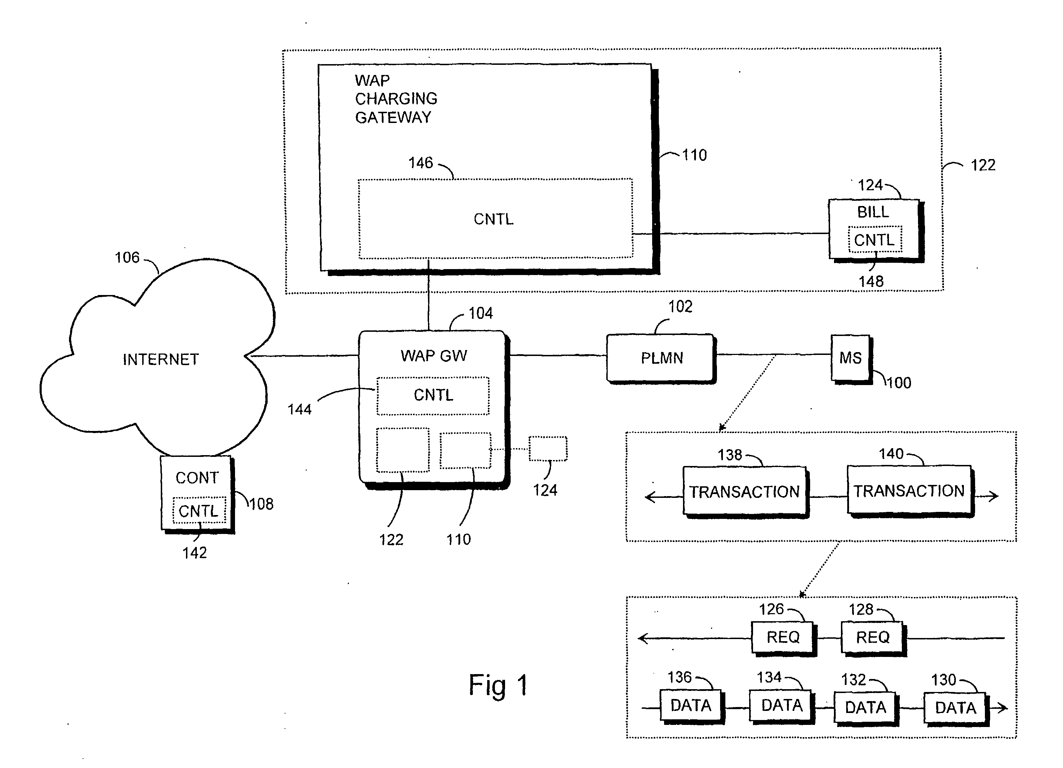

Figure 1 shows the application of the method to a mobile system employing the wireless application protocol (WAP) that uses the request-response technology. The application of the invention is not, however, restricted to the case of the example, but the invention can also be applied to other data networks, such as the conventional Intemet or third-generation mobile systems, for instance UMTS.

Figure 1 is a simplified general view of a WAP system of the invention connected to the network part of a mobile system. The mobile system can be for instance a GSM system, GPRS system, UMTS system or some other mobile system employing the wireless application protocol (WAP).

As shown in Figure 1, it is possible to establish a data transmission connection from a subscriber terminal 100 through a public land mobile network (PLMN) 102 to a node 104 of a data network, in this case a WAP gateway 104. A connection is then established from the WAP gateway 104 through the Internet 106 to a content server 108 of a content provider providing the desired service entity. The connection is established on the basis of the Internet address of the service, i.e. the WAP gateway 104 has means 144 for transmitting a service request 126, 128 sent by the subscriber terminal 100 to the content server 108. Correspondingly, the WAP gateway 104 has means 144 for transmitting response data 130, 132, 134, 136 generated by the content provider in the content server 108 on the basis of the service request 126, 128 to the subscriber terminal 100. The content server comprises means 142 to receive the service request and to transmit the response data to the WAP gateway 104. The WAP gateway 104 and the content server 108 are preferably implemented by hardware equipped with a microprocessor, for instance a computer with its peripherals, and with the required system and application programs. The means 144, 142 are thus preferably computer modules that implement the required functionality. The means 142, 144 can be implemented for instance in the control part by using processors and their software, whereby the functionality of the means is implemented as parts of software, for instance program modules. During the design and implementation of the system, the distribution of the functions between the software and hardware is determined for instance on the basis of the manufacturing costs and the required data processing capacity and rate. Some of the functions can be implemented by hardware.

Even though Figure 1 shows the service requests and response data as packets, such as messages of a short message service, they can as well be transmitted over a circuit-switched connection, such as a data call. The essential matter is that the traffic can be analysed and the transactions related to a specific service and service entity can be identified from it. In the example of Figure 1, four response data packets 130, 132, 134, 136 correspond to two service requests 126, 128 of the user, but other kinds of combinations are also possible. Thus, there may be one or more service requests and responses. This makes it difficult to identify what traffic belongs and responses. This makes it difficult to identify what traffic belongs to which service and service entity.

Even though the service event in Figure 1 is shown using the request-response (pull) technology, it can also use the push technology, in which a server transmits data to a subscriber terminal on the basis of a request made once by the user without a transmission request related to an individual transmission.

The method can be applied using both a connection-oriented and a connectionless data transmission connection.

A billing system 122 is connected to the WAP gateway. The billing system comprises a billing unit 124 that further comprises billing means 148. A charging information system (WAP charging gateway) 110 is connected to the billing system 122, which depending on the implementation can be a separate unit or a part of the billing system 122. It can also be implemented as a part of the WAP gateway 104. The billing system 122 can depending on the implementation be a separate unit or a part of the WAP gateway 104, or it can belong partly to the WAP gateway while a part of the billing system remains outside the WAP gateway.

The charging information system 110 comprises the following parts: identification means 146 to identify the chargeable transactions 138, 140 of the chargeable service entity, and means 146 for generating a content ticket 224, 226 of the service entity. The identification means 146 and means 146 for generating the content ticket 224, 226 as well as the billing unit 124 with its billing means 148 are implemented, like the WAP gateway, as a suitable combination of hardware and software.

The connection provider can define when the generation of the content ticket 224, 226 is started, how the individual transactions, from which the ticket is generated, are identified, how the content ticket is generated and what is included in it. A content ticket is not generated from all transactions or services, but information on some of the transactions, for instance individual transactions, can be forwarded directly to the billing system. The connection provider can configure its charging information system 110 to decide whether a content ticket is generated, based on the identification of the content provider 108 or the identification of the transaction 138, 140, for instance. The decision to start generating a content ticket 224, 226 can be made based on identifying a specific URL or IP address of a content provider with the means 146 and on the basis of the address, the transactions are identified to be ones from which the content ticket can be generated.

When the connection provider decides to start generating the content ticket, its charging information system identifies the transactions related to the service entity, from which the content ticket is generated. This is done by means of the content identifier (content_id) attached to the transaction, i.e. the same content identifier is attached to the transactions that belong to the same service entity. The content identifier is a subscriber-specific and session-specific identifier that the content provider 108 attaches with the means 142 to each service entity.

The connection provider can also configure its charging information system 110 to decide whether to start generating the content ticket based on identifying the content identifier (content_id) related to a transaction with the means 146. If the content identifier is not found, the content ticket is not generated.

A service platform identifier (serviceplatform_id) related to the transaction is also attached to the content ticket by using the means 146. With this identifier, it is possible to identify both the content provider and the service platform, from which the content is provided. One content provider may have several service platforms, from which it provides identical content, it can for instance provide the same content entity both as a conventional Internet service and as a WAP service, or it can provide the content from several different content servers. The service platform identifier makes it possible to distinguish the different content providers from each other, since several different content providers can use the same content identifier space. On the basis of the identifier, it is for instance possible to assign to the content provider its share of the amount of money charged from the user for the service entity.

With the means 142, the content provider 108 can attach the service platform identifier (serviceplatform_id) to each transaction of its service response. If the content provider does not attach the service platform identifier to the transactions, the connection provider can generate it on the basis of the URL or IP address of the content provider and attach it to the content ticket by using the means 146. Even though the content provider did not attach the identifier to its service, or only attached it to its services arriving from certain service platforms, it is in this manner possible to have an identifier describing the content provider in the content ticket, and on the basis of the identifier, the ticket can be used to assign a charging event and the processing of a bill to the service provided by the correct content provider and service platform.

The content identifier (content_id) and the service platform identifier (serviceplatform_id) can be transmitted by means of the means 142 to the connection provider in key fields attached to the header information of the service response, typically in the key fields of http headers. The identifiers can, however, also be transmitted separate from the service response data.

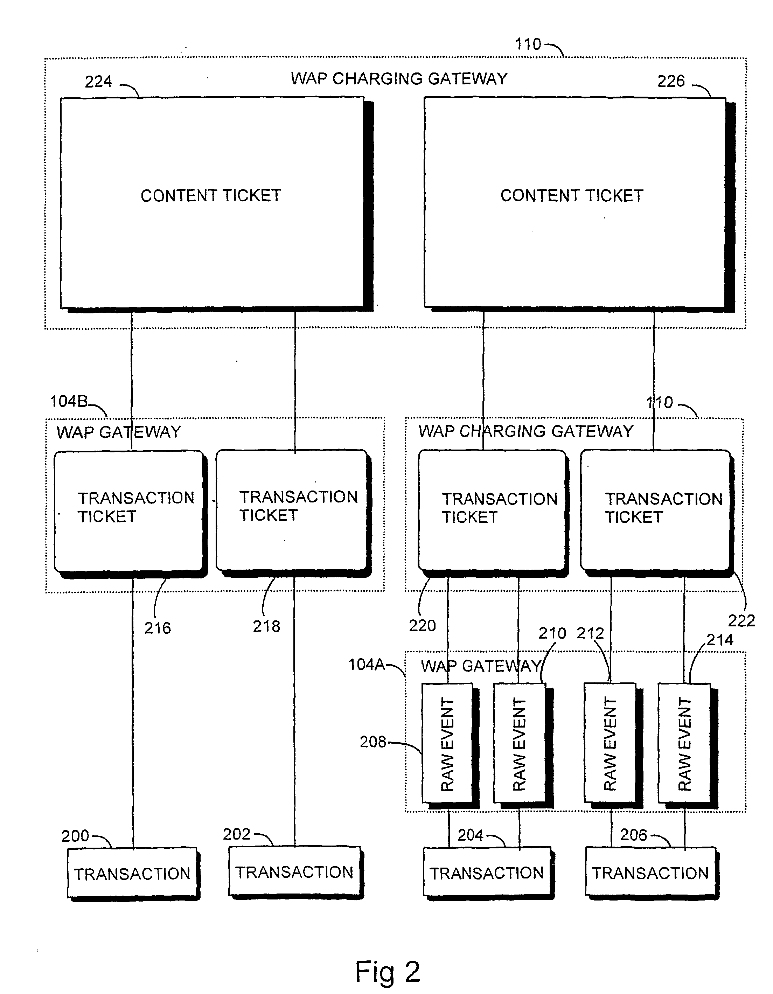

The connection provider generates the content ticket on the basis of the transaction identification information obtained from the WAP gateway 104. The WAP gateway 104 can generate the required identification information as shown in Figure 2 either in such a manner that the WAP gateway 104B generates with the means 144 one transaction ticket 216, 218 of each transaction 200, 202 or the WAP gateway 104A generates with the means 144 several raw events 208, 210, 212, 214 of each transaction 204, 206. In the charging information system 110, these raw events 208, 210, 212, 214 can then be generated into a transaction ticket 220, 222 with the means 146. The content ticket 224, 226 is generated in the charging information system 110 by identifying and combining the transaction tickets 216 and 218 or 220 and 222 belonging to one service entity by means of the content identifier (content_id) and the service platform identifier (serviceplatform_id) with the means 146.

The connection provider can configure the generation of the content ticket as needed. In addition to the required user identifier, typically the MSISDN number, content identifier (content_id) and the service platform identifier (serviceplatform_id), it is also possible to attach to it for instance information on the success of the ticket generation or information on the success of individual transactions, or for instance information on the name of the service entity.

The finished content ticket of the service entity is used in the billing unit 124 to charge for the service entity by means of the billing means 148. The content ticket can also be used in monitoring and collecting statistics, for instance when needing information on the success of the service or when examining the functionality of different service entities in different environments and terminals.

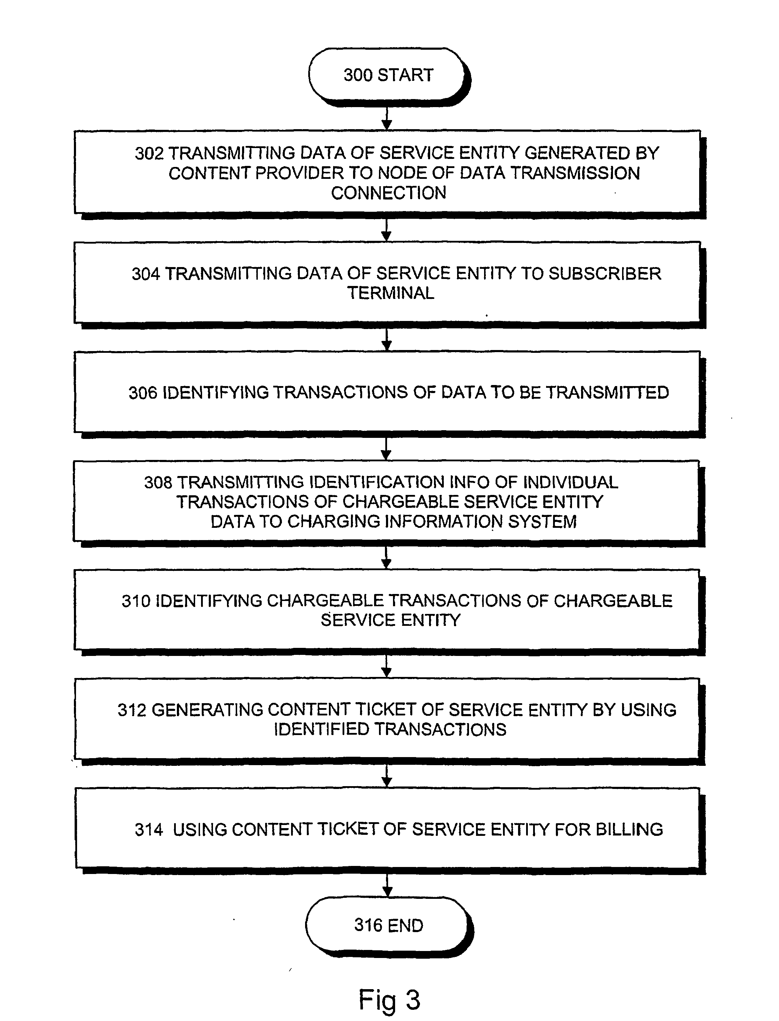

Finally, the flow chart in Figure 3 shows a method of generating charging information in a data network.

The method starts from block 300. In block 302, the data of the service entity generated by the content provider is transmitted to a node of the data transmission connection. In block 304, the data of the service entity is transmitted to the subscriber terminal.

In block 306, the transactions of the transmitted data are identified. This takes place in the node 104 of the data network, in which the transaction tickets 216, 218 or raw events 208, 210, 212, 214 are also generated. In the next block 308, the identifier information of the identified transactions, for instance the transaction tickets 216, 218 or raw events 208, 210, 212, 214, is transmitted to the charging information system 110.

In block 310, the chargeable transactions of the chargeable service entity are identified. The identification is done by identifying the URL or IP address or content identifier as described above and on the basis of the identification, a decision is made whether to start generating the content ticket or not. When the transaction is identified as one from which a content ticket is generated, the transactions belonging to one service entity are always identified on the basis of the content identifier and service platform identifier of the transaction. Next, in block 312, the content ticket 224, 226 of the service entity is generated using the identified transactions. This is preferably done on the basis of the content identifier and service platform identifier and by attaching to the ticket all other necessary information, such as the user identifier, for instance MSISDN, and by adding, as described above, other information, such as the name of the service or success information as necessary. Finally, in block 314, the content ticket of the service entity is used in billing.

Even though the invention has been explained in the above with reference to examples in accordance with the accompanying drawings, it is apparent that the invention is not restricted to them but can be modified in many ways within the scope of the inventive idea disclosed in the attached claims.

## Claims

1. A method of generating charging data in a data network, comprising
(302) transmitting data generated by a content provider in a content server to a node of a data transmission connection üsed by a connection provider,
(304) transmitting the data of a service entity generated by the content provider from the node through the data transmission connection used by the connection provider to a subscriber terminal,
(306) identifying in the node individual transactions in the data to be transmitted to the subscriber terminal,
(308) transmitting the identification information of the identified transactions from the node to the charging information system of the connection provider,
**characterized by** the method further comprising
(310) identifying in the charging information system the individual transactions in the chargeable service entity,
(312) generating in the charging information system one content ticket for each identified service entity, and
(314) using the content ticket in billing for the service entity.

2. A method as claimed in claim 1, wherein the data network is the Internet.

3. A method as claimed in claim 1, wherein the data network is a mobile system employing the wireless application protocol (WAP).

4. A method as claimed in any one of the preceding claims, wherein the connection provider generates transaction-specific tickets on the basis of the transactions.

5. A method as claimed in any one of the preceding claims, wherein the charging information system is a WAP charging gateway.

6. A method as claimed in any one of the preceding claims, wherein the connection provider generates the content ticket on the basis of the transaction tickets generated on the basis of the individual transactions.

7. A method as claimed in any one of the preceding claims, further comprising
defining a content identifier identifying the chargeable service entity, and
transmitting to the connection provider the content identifier associated with the transaction of the service entity to be transmitted to the subscriber terminal.

8. A method as claimed in any one of the preceding claims, wherein the content identifier is used to identify the transactions of the chargeable service entity.

9. A method as claimed in any one of the preceding claims, further comprisng generating the content ticket of the chargeable service entity by using the content identifier.

10. A method as claimed in any one of the preceding claims, wherein the content provider generates the content identifier associated with the individual transactions.

11. A method as claimed in claim 10, wherein the content identifier is inserted in the header information of the individual transactions of the service entity.

12. A method as claimed in claim 10, wherein the content identifier is inserted in the http header information of the individual transactions of the service entity.

13. A method as claimed in any one of claims 7 to 10, wherein the content identifier is transmitted separate from the data of the individual transactions of the service entity.

14. A method as claimed in any one of the preceding claims, further comprising defining a service platform identifier identifying the service platform of the content provider.

15. A method as claimed in claim 14, wherein the content provider generates the service platform identifier.

16. A method as claimed in any one of claims 14 to 15, wherein further comprising transmitting to the connection provider the service platform identifier associated with the transaction of the service entity to be transmitted to the subscriber terminal.

17. A method as claimed in any one of claims 14 to 16, wherein the connection provider generates the service platform identifier associated with the individual transaction of the service entity to be transmitted to the subscriber terminal.

18. A method as claimed in any one of claims 14 to 17, wherein the service platform identifier is used for identifying the transactions of the chargeable service entity.

19. A method as claimed in any one of claims 14 to 18, wherein the service platform identifier is used in generating the content ticket of the chargeable service entity.

20. A method as claimed in any one of claims 14 to 19, wherein the service platform identifier is inserted in the header information of the individual transactions of the service entity.

21. A method as claimed in any one of claims 14 to 20, wherein the service platform identifier is inserted in the http header information of the individual transactions of the service entity.

22. A method as claimed in any one of claims 14 to 19, wherein the service platform identifier is transmitted separate from the data of the individual transactions of the service entity.

23. A method as claimed in any one of the preceding claims, wherein the numerical IP address of the service is used to identify the transactions of the chargeable service entity.

24. A method as claimed in any one of claims 14 to 22, wherein the numerical IP address of the service is used in generating the service platform identifier.

25. A method as claimed in any one of the preceding claims, wherein the URL address of the service is used to identify the transactions of the chargeable service entity.

26. A method as claimed in any one of claims 14 to 22, wherein the URL address of the service is used in generating the service platform identifier.

27. A method as claimed in any one of the preceding claims, wherein a user identifier is attached to the content ticket.

28. A method as claimed in claim 27, wherein the user identifier is the intemational ISDN number of the mobile subscriber.

29. A method as claimed in claim 27, wherein the user identifier is the IP address identifying the subscriber terminal in the Internet network.

30. A data network comprising:
a content server (108) of a content provider that has a connection through the Internet to a node (104) of a data transmission connection used by a connection provider, from which there is a connection through a data transmission connection (102) used by the connection provider to a subscriber terminal (100), in addition, there is a connection to a charging information system (110) from the node (104), and the node (104) comprises means (144) for identifying individual transactions (138, 140) in data to be transmitted to the subscriber terminal,
**characterized in that** the data network further comprises
means (146) for identifying the individual transactions of a chargeable service entity in the charging information system (110),
means (146) for generating in the charging information system (110) one content ticket for each service entity, and
means (148) for using the content ticket in billing for the service entity.

31. A data network as claimed in claim 30, wherein the data network is the Intemet.

32. A data network as claimed in claim 30, wherein the data network is a mobile system employing the wireless application protocol (WAP).

33. A data network as claimed in any one of the preceding claims, wherein it comprises means (144, 146) that the connection provider uses to generate transaction-specific tickets (216, 218, 220, 222) on the basis of transactions.

34. A data network as claimed in any one of the preceding claims, wherein the charging information system (110) is a WAP charging gateway:

35. A data network as claimed in any one of the preceding claims, wherein the network comprises means (146) that the connection provider uses to generate a content ticket on the basis of the transaction tickets (216, 218, 220, 222) generated on the basis of the individual transactions.

36. A data network as claimed in any one of the preceding claims, wherein the network comprises
means (142) for defining a content identifier identifying a chargeable service entity, and
means (142) for transmitting to the connection provider the content identifier associated with the transaction of the service entity to be transmitted to the subscriber terminal.

37. A data network as claimed in any one of the preceding claims, wherein the network comprises means (146) for using the content identifier to identify the transaction of the chargeable service entity.

38. A data network as claimed in any one of the preceding claims, wherein the network comprises means (146) for generating a content ticket for the chargeable service entity by using the content identifier.

39. A data network as claimed in any one of the preceding claims, wherein the network comprises means (142) that the content provider uses to generate the content identifier associated with individual transactions.

40. A data network as claimed in claim 39, wherein the network comprises means (142) for inserting the content identifier in the header information of the individual transactions of the service entity.

41. A data network as claimed in claim 39, wherein the network comprises means (142) for inserting the content identifier in the http header information of the individual transactions of the service entity.

42. A data network as claimed in claims 36 to 39, wherein the network comprises means (142) for transmitting the content identifier identifying the service entity separate from the data of the individual transactions of the service entity.

43. A data network as claimed in any one of the preceding claims, wherein the network comprises means (142, 146) for defining a service platform identifier identifying the service platform of the content provider.

44. A data network as claimed in claim 43, wherein the network comprises means (142) that the content provider uses to generate the service platform identifier.

45. A data network as claimed in any one of claims 43 to 44, wherein the network comprises means (142) for transmitting to the connection provider the service platform identifier associated with the transaction of the service entity to be transmitted to the subscriber terminal.

46. A data network as claimed in any one of claims 43 to 45, wherein the network comprises means (146) that the connection provider uses to generate the service platform identifier associated with the individual transaction of the service entity to be transmitted to the subscriber terminal.

47. A data network as claimed in any one of claims 43 to 46, wherein the network comprises means (146) for using the service platform identifier for identifying the transactions of the chargeable service entity.

48. A data network as claimed in any one of claims 43 to 47, wherein the network comprises means (146) for using the service platform identifier for generating the content ticket of the chargeable service entity.

49. A data network as claimed in any one of claims 43 to 48, wherein the network comprises means (142) for inserting the service platform identifier in the header information of the individual transactions of the service entity.

50. A data network as claimed in any one of claims 43 to 49, wherein the network comprises means (142) for inserting the service platform identifier in the http header information of the individual transactions of the service entity.

51. A data network as claimed in any one of claims 43 to 48, wherein the network comprises means (142) for transmitting the service platform identifier separate from the data of the individual transactions of the service entity.

52. A data network as claimed in any one of the claims 30 to 51, wherein the network comprises means (146) for using the numerical IP address of the service to identify the transactions of the chargeable service entity.

53. A data network as claimed in any one of claims 43 to 51, wherein the network comprises means (146) for using the numerical IP address of the service in generating the service platform identifier.

54. A data network as claimed in any one of claims 30 to 53, wherein the network comprises means (146) for using the URL address of the service to identify the transactions of the chargeable service entity.

55. A data network as claimed in any one of claims 43 to 51, wherein the network comprises means (146) for using the URL address of the service in generating the service platform identifier.

56. A data network as claimed in any one of claims 30 to 55, wherein the network comprises means (146) for attaching a user identifier to the content ticket.

57. A data network as claimed in claim 56, wherein the user identifier is the international ISDN number of the mobile subscriber (MSISDN).

58. A data network as claimed in claim 56, wherein the user identifier is the IP address identifying the subscriber terminal in the Internet network.

## Patentansprüche

1. Verfahren zum Erzeugen von Abrechnungsdaten in einem Datennetz, das aufweist
(302) Senden von Daten, die von einem Content-Provider in einem Content-Server erzeugt werden, zu einem Knoten einer Datensendeverbindung, die von einem Verbindungs-Provider verwendet wird,
(304) Senden der Daten einer Dienstleistungseinheit, die von dem Content-Provider erzeugt werden, von dem Knoten durch die Datensendeverbindung, die von dem Verbindungs-Provider verwendet wird, zu einem Teilnehmer-Endgerät,
(306) Identifizieren einzelner Transaktionen in den zu dem Teilnehmer-Endgerät zu sendenden Daten in den Knoten,
(308) Senden einer Identifikationsinformation der erfassten Transaktionen von dem Knoten zu dem Abrechnungsinformationssystem des Verbindungs-Providers,
***dadurch gekennzeichnet, dass*** das Verfahren weiterhin aufweist
(310) Identifizieren der einzelnen Transaktionen in der abrechenbaren Dienstleistungseinheit in dem Abrechnungsinformationssystem,
(312) Erzeugen eines Content-Tickets für jede identifizierte Dienstleistungseinheit in dem Abrechnungsinformationssystem, und
(314) Verwenden des Content-Tickets beim Bezahlen für die Dienstleistungseinheit.

2. Verfahren nach Anspruch 1, wobei das Datennetz das Internet ist.

3. Verfahren nach Anspruch 1, wobei das Datennetz ein mobiles System ist, das das Wireless-Application-Protocol (WAP) verwendet.

4. Verfahren nach einem der vorhergehenden Ansprüche, wobei der Verbindungs-Provider auf der Grundlage der Transaktionen transaktionsspezifische Tickets erzeugt.

5. Verfahren nach einem der vorhergehenden Ansprüche, wobei das Abrechnungsinformationssystem ein WAP-Abrechnungs-Gateway ist.

6. Verfahren nach einem der vorhergehenden Ansprüche, wobei der Verbindungs-Provider das Content-Ticket auf der Grundlage der Transaktionstickets erzeugt, die auf der Grundlage der einzelnen Transaktionen erzeugt werden.

7. Verfahren nach einem der vorhergehenden Ansprüche, das weiterhin aufweist
Definieren eines Content-Identifikators, der die abrechenbare Dienstleistungseinheit identifiziert, und
Senden des Content-identifikators, der der Transaktion der Dienstleistungseinheit zugehörig ist, die zu dem Teilnehmer-Endgerät zu senden ist, zu dem Verbindungs-Provider.

8. Verfahren nach einem der vorhergehenden Ansprüche, wobei der Content-Identifikator verwendet wird, um die Transaktionen der abrechenbaren Dienstleistungseinheit zu identifizieren.

9. Verfahren nach einem der vorhergehenden Ansprüche, das weiterhin ein Erzeugen des Content-Tickets der abrechenbaren Dienstleistungseinheit unter Verwendung des Content-ldentifikators aufweist.

10. Verfahren nach einem der vorhergehenden Ansprüche, wobei der Content-Provider den Content-Identifikator erzeugt, der den einzelnen Transaktionen zugehörig ist.

11. Verfahren nach Anspruch 10, wobei der Content-Identifikator in die Header-Information der einzelnen Transaktionen der Dienstleistungseinheit eingefügt wird.

12. Verfahren nach Anspruch 10, wobei der Content-Identifikator in die HTTP-Header-Information der einzelnen Transaktionen der Dienstleistungseinheit eingefügt wird.

13. Verfahren nach einem der Ansprüche 7 bis 10, wobei der Content-Identifikator getrennt von den Daten der einzelnen Transaktionen der Dienstleistungseinheit gesendet wird.

14. Verfahren nach einem der vorhergehenden Ansprüche, das weiterhin ein Definieren eines Dienstleistungsplattform-Identifikators aufweist, der die Dienstleistungsplattform des Content-Providers identifiziert.

15. Verfahren nach Anspruch 14, wobei der Content-Provider den Dienstleistungsplattform-Identifikator erzeugt.

16. Verfahren nach einem der Ansprüche 14 bis 15, das weiterhin ein Senden des Dienstleistungsplattform-Identifikators aufweist, der der Transaktion der Dienstleistungseinheit zugehörig ist, die zu dem Teilnehmer-Endgerät zu senden ist.

17. Verfahren nach einem der Ansprüche 14 bis 16, wobei der Verbindungs-Provider den Dienstleistungsplattform-Identifikator erzeugt, der der einzelnen Transaktion der Dienstleistungseinheit zugehörig ist, die zu dem Teilnehmer-Endgerät zu senden ist.

18. Verfahren nach einem der Ansprüche 14 bis 17, wobei der Dienstleistungsplattform-ldentifikator zum Identifizieren der Transaktionen der abrechenbaren Dienstleistungseinheit verwendet wird.

19. Verfahren nach einem der Ansprüche 14 bis 18, wobei der Dienstleistungsplattform-Identifikator beim Erzeugen des Content-Tickets der abrechenbaren Dienstleistungseinheit verwendet wird.

20. Verfahren nach einem der Ansprüche 14 bis 19, wobei der Dienstleistungsplattform-Identifikator in die Header-Information der einzelnen Transaktionen der Dienstleistungseinheit eingefügt wird.

21. Verfahren nach einem der Ansprüche 14 bis 20, wobei der Dienstleistungsplattform-Identifikator in die HTTP-Header-Information der einzelnen Transaktionen der Dienstleistungseinheit eingefügt wird.

22. Verfahren nach einem der Ansprüche 14 bis 19, wobei der Dienstleistungsplattform-Identifikator getrennt von den Daten der einzelnen Transaktionen der Dienstleistungseinheit gesendet wird.

23. Verfahren nach einem der vorhergehenden Ansprüche, wobei die numerische IP-Adresse der Dienstleistung verwendet wird, um die Transaktionen der abrechenbaren Dienstleistungseinheit zu identifizieren.

24. Verfahren nach einem der Ansprüche 14 bis 22, wobei die numerische IP-Adresse der Dienstleistung beim Erzeugen des Dienstleistungsplattform-Identifikators verwendet wird.

25. Verfahren nach einem der vorhergehenden Ansprüche, wobei die URL-Adresse der Dienstleistung verwendet wird, um die Transaktionen der abrechenbaren Dienstleistungseinheit zu identifizieren.

26. Verfahren nach einem der Ansprüche 14 bis 22, wobei die URL-Adresse der Dienstleistung beim Erzeugen des Dienstleistungsplattform-Identifikators verwendet wird.

27. Verfahren nach einem der vorhergehenden Ansprüche, wobei ein Benutzer-Identifikator an das Content-Ticket angehängt wird.

28. Verfahren nach Anspruch 27, wobei der Benutzer-Identifikator die internationale ISDN-Nummer des mobilen Teilnehmers ist.

29. Verfahren nach Anspruch 27, wobei der Benutzer-Identifikator die IP-Adresse ist, die das Teilnehmer-Endgerät in dem Internet-Netz identifiziert.

30. Datennetz, das aufweist.
einen Content-Server (108) eines Content-Providers, der eine Verbindung durch das Internet zu einem Knoten (104) einer Datensendeverbindung aufweist, die von einem Verbindungs-Provider verwendet wird, an welchem es eine Verbindung durch eine Datensendeverbindung (102), die von dem Verbindungs-Provider verwendet wird, zu einem Teilnehmer-Endgerät (100) gibt, wobei es zusätzlich eine Verbindung zu einem Abrechnungsinformationssystem (110) von dem Knoten (104) gibt und wobei der Knoten (104) eine Einrichtung (144) zum Identifizieren einzelner Transaktionen (138, 140) in Daten aufweist, die zu dem Teilnehmer-Endgerät zu senden sind,
***dadurch gekennzeichnet, dass*** das Datennetz weiterhin aufweist
eine Einrichtung (146) zum Identifizieren der einzelnen Transaktionen einer abrechenbaren Dienstleistungseinheit in dem Abrechnungsinformationssystem (110),
eine Einrichtung (146) zum Erzeugen eines Content-Tickets für jede Dienstleistungseinheit in dem Abrechnungsinformationssystem (110), und
eine Einrichtung (148) zum Verwenden des Content-Tickets beim Bezahlen für die Dienstleistungseinheit.

31. Datennetz nach Anspruch 30, wobei das Datennetz das Internet ist.

32. Datennetz nach Anspruch 30, wobei das Datennetz ein mobiles System ist, das das Wireless-Application-Protocol (WAP) verwendet.

33. Datennetz nach einem der vorhergehenden Ansprüche, wobei es eine Einrichtung (144, 146) aufweist, die der Verbindungs-Provider verwendet, um transaktionsspezifische Tickets (216, 218, 220, 222) auf der Grundlage von Transaktionen zu erzeugen.

34. Datennetz nach einem der vorhergehenden Ansprüche, wobei das Abrechnungsinformationssystem (110) ein WAP-Abrechnungs-Gateway ist.

35. Datennetz nach einem der vorhergehenden Ansprüche, wobei das Netz eine Einrichtung (146) aufweist, die der Verbindungs-Provider verwendet, um ein Content-Ticket auf der Grundlage der Transaktions-Tickets (216, 218, 220, 222) zu erzeugen, die auf der Grundlage der einzelnen Transaktionen erzeugt werden.

36. Datennetz nach einem der vorhergehenden Ansprüche, wobei das Datennetz aufweist
eine Einrichtung (142) zum Definieren eines Content-Identifikators, der eine abrechenbare Dienstleistungseinheit identifiziert, und
eine Einrichtung (142) zum Senden des Content-Identifikators, der der Transaktion der Dienstleistungseinheit zugehörig ist, die zu dem Teilnehmer-Endgerät zu senden ist, zu dem Verbindungs-Provider.

37. Datennetz nach einem der vorhergehenden Ansprüche, wobei das Netz eine Einrichtung (146) zum Verwenden des Content-Identifikators aufweist, um die Transaktion der abrechenbaren Dienstleistungseinheit zu identifizieren.

38. Datennetz nach einem der vorhergehenden Ansprüche, wobei das Netz eine Einrichtung (146) zum Erzeugen eines Content-Tickets für die abrechenbare Dienstleistungseinheit unter Verwendung des Content-Identifikators aufweist.

39. Datennetz nach einem der vorhergehenden Ansprüche, wobei das Netz eine Einrichtung (142) aufweist, die der Content-Provider verwendet, um den Content-Identifikator zu erzeugen, der den einzelnen Transaktionen zugehörig ist.

40. Datennetz nach Anspruch 39, wobei das Netz eine Einrichtung (142) zum Einfügen des Content-Identifikators in die Header-Information der einzelnen Transaktionen der Dienstleistungseinheit aufweist.

41. Datennetz nach Anspruch 39, wobei das Netz eine Einrichtung (142) zum Einfügen des Content-Identifikators in die HTTP-Header-Information der einzelnen Transaktionen der Dienstleistungseinheit aufweist.

42. Datennetz nach einem der Ansprüche 36 bis 39, wobei das Netz eine Einrichtung (142) zum Senden des Content-Identifikators, der die Dienstleistungseinheit identifiziert, getrennt von den Daten der einzelnen Transaktionen der Dienstleistungseinheit aufweist.

43. Datennetz nach einem der vorhergehenden Ansprüche, wobei das Netz eine Einrichtung (142, 146) zum Definieren einer Dienstleistungsplattform-Identifikators aufweist, der die Dienstleistungsplattform des Content-Providers identifiziert.

44. Datennetz nach Anspruch 43, wobei das Netz eine Einrichtung (142) aufweist, die der Content-Provider verwendet, um den Dienstleistungsplattform-Identifikator zu erzeugen.

45. Datennetz nach einem der Ansprüche 43 bis 44, wobei das Netz eine Einrichtung (142) zum Senden des Dienstleistungsplattform-ldentifikators, der der Transaktion der Dienstleistungseinheit zugewiesen ist, die zu dem Teilnehmer-Endgerät zu senden ist, zu dem Verbindungs-Provider aufweist.

46. Datennetz nach einem der Ansprüche 43 bis 45, wobei das Netz eine Einrichtung (146) aufweist, die der Verbindungs-Provider verwendet, um den Dienstleistungsplattform-Identifikator zu erzeugen, der der einzelnen Dienstleistung der Dienstleistungseinheit zugewiesen ist, die zu dem Teilnehmer-Endgerät zu senden ist.

47. Datennetz nach einem der Ansprüche 43 bis 46, wobei das Netz eine Einrichtung (146) zum Verwenden des Dienstleistungsplattform-Identifikators zum Identifizieren der Transaktionen der abrechenbaren Dienstleistungseinheit aufweist.

48. Datennetz nach einem der Ansprüche 43 bis 47, wobei das Netz eine Einrichtung (146) zum Verwenden des Dienstleistungsplattform-Identifikators zum Erzeugen des Content-Tickets der abrechenbaren Dienstleistungseinheit aufweist.

49. Datennetz nach einem der Ansprüche 43 bis 48, wobei das Netz eine Einrichtung (142) zum Einfügen des Dienstleistungsplattform-Identifikators in die Header-Information der einzelnen Transaktionen der Dienstleistungseinheit aufweist.

50. Datennetz nach einem der Ansprüche 43 bis 49, wobei das Netz eine Einrichtung (142) zum Einfügen des Dienstleistungsplattform-Identifikators in die HTTP-Header-Information der einzelnen Transaktionen der Dienstleistungseinheit aufweist.

51. Datennetz nach einem der Ansprüche 43 bis 48, wobei das Netz eine Einrichtung (142) zum Senden des Dienstleistungsplattform-Identifikators getrennt von den Daten der einzelnen Transaktionen der Dienstleistungseinheit aufweist.

52. Datennetz nach einem der Ansprüche 30 bis 51, wobei das Netz eine Einrichtung (146) zum Verwenden der numerischen IP-Adresse der Dienstleistung aufweist, um die Transaktionen der abrechenbaren Dienstleistungseinheit zu identifizieren.

53. Datennetz nach einem der Ansprüche 43 bis 51, wobei das Netz eine Einrichtung (146) zum Verwenden der numerischen IP-Adresse der Dienstleistung beim Erzeugen des Dienstleistungsplattform-Identifikators aufweist.

54. Datennetz nach einem der Ansprüche 30 bis 53, wobei das Netz eine Einrichtung (146) zum Verwenden der URL-Adresse der Dienstleistung aufweist, um die Transaktionen der abrechenbaren Dienstleistungseinheit zu identifizieren.

55. Datennetz nach einem der Ansprüche 43 bis 51, wobei das Netz eine Einrichtung (146) zum Verwenden der URL-Adresse der Dienstleistung beim Erzeugen des Dienstleistungsplattform-Identifikators aufweist.

56. Datennetz nach einem der Ansprüche 30 bis 55, wobei das Netz eine Einrichtung (146) zum Anhängen eines Benutzer-Identifikators an das Content-Ticket aufweist.

57. Datennetz nach Anspruch 56, wobei der Benutzer-Identifikator die internationale ISDN-Nummer des mobilen Teilnehmers (MSISDN) ist.

58. Datennetz nach Anspruch 56, wobei der Benutzer-Identifikator die IP-Adresse ist, die das Teilnehmer-Endgerät in dem Internet-Netz identifiziert.

## Revendications

1. Procédé de génération de données de chargement dans un réseau de données, comprenant :
(302) la transmission de données générées par un fournisseur de contenu dans un serveur de contenu à un noeud d'une connexion de transmission de données utilisée par un fournisseur de connexion,
(304) la transmission des données d'une entité de service générées par le fournisseur de contenu du noeud à un terminal d'abonné via la connexion de transmission de données utilisée par le fournisseur de connexion,
(306) l'identification dans le noeud de transactions individuelles, des données à transmettre au terminal d'abonné,
(308) la transmission des informations d'identification des transactions identifiées du noeud au système d'informations de chargement du fournisseur de connexion, **caractérisé en ce que** le procédé comprend en outre :
(310) l'identification dans le système d'informations de chargement des transactions individuelles dans l'entité de service à charger,
(312) la génération dans le système d'informations de chargement d'un ticket de contenu pour chaque entité de service identifiée, et
(314) l'utilisation du ticket de contenu dans la facturation de l'entité de service.

2. Procédé selon la revendication 1, dans lequel le réseau de données est Internet.

3. Procédé selon la revendication 1, dans lequel le réseau de données est un système mobile employant le protocole d'application sans fil (WAP).

4. Procédé selon l'une quelconque des revendications précédentes, dans lequel le fournisseur de connexion génère des tickets spécifiques aux transactions en se basant sur les transactions.

5. Procédé selon l'une quelconque des revendications précédentes, dans lequel le système de d'informations de chargement est une passerelle de chargement WAP.

6. Procédé selon l'une quelconque des revendications précédentes, dans lequel le fournisseur de connexion génère le ticket de contenu en se basant sur les tickets de transaction générés sur la base des transactions individuelles.

7. Procédé selon l'une quelconque des revendications précédentes, comprenant en outre :
la définition d'un identificateur de contenu identifiant l'entité de service à charger, et
la transmission au fournisseur de connexion, de l'identificateur de contenu conjointement avec la transaction de l'entité de service à transmettre au terminal d'abonné.

8. Procédé selon l'une quelconque des revendications précédentes, dans lequel l'identificateur de contenu est utilisé pour identifier les transactions de l'entité de service à charger.

9. Procédé selon l'une quelconque des revendications précédentes, comprenant en outre la génération du ticket de contenu de l'entité de service à charger en utilisant l'identificateur de contenu.

10. Procédé selon l'une quelconque des revendications précédentes, dans lequel le fournisseur de contenu génère l'identificateur de contenu associé aux transactions individuelles.

11. Procédé selon la revendication 10, dans lequel l'identificateur de contenu est inséré dans les informations d'en-tête des transactions individuelles de l'entité de service.

12. Procédé selon la revendication 10, dans lequel l'identificateur de contenu est inséré dans les informations d'en-tête http des transactions individuelles de l'entité de service.

13. Procédé selon l'une quelconque des revendications 7 à 10, dans lequel l'identificateur de contenu est transmis séparément des données des transactions individuelles de l'entité de service.

14. Procédé selon l'une quelconque des revendications précédentes, comprenant en outre la définition d'un identificateur de plateforme de service identifiant la plateforme de service du fournisseur de contenu.

15. Procédé selon la revendication 14, dans lequel le fournisseur de contenu génère l'identificateur de plateforme de service.

16. Procédé selon l'une quelconque des revendications 14 et 15, comprenant en outre la transmission au fournisseur de connexion, l'identificateur de plateforme de service associé à la transaction de l'entité de service à transmettre au terminal d'abonné.

17. Procédé selon l'une quelconque des revendications 14 à 16, dans lequel le fournisseur de connexion génère l'identificateur de plateforme de service associé à la transaction individuelle de l'entité de service à transmettre au terminal d'abonné.

18. Procédé selon l'une quelconque des revendications 14 à 17, dans lequel l'identificateur de plateforme de service est utilisé pour identifier les transactions de l'entité de service à charger.

19. Procédé selon l'une quelconque des revendications 14 à 18, dans lequel l'identificateur de plateforme de service est utilisé pour générer le ticket de contenu de l'entité de service à charger.

20. Procédé selon l'une quelconque des revendications 14 à 19, dans lequel l'identificateur de plateforme de service est inséré dans les informations d'entête des transactions individuelles de l'entité de service.

21. Procédé selon l'une quelconque des revendications 14 à 20, dans lequel l'identificateur de plateforme de service est inséré dans les informations d'entête http des transactions individuelles de l'entité de service.

22. Procédé selon l'une quelconque des revendications 14 à 19, dans lequel l'identificateur de plateforme de service est transmis séparément des données des transactions individuelles de l'entité de service.

23. Procédé selon l'une quelconque des revendications précédentes, dans lequel l'adresse IP numérique du service est utilisée pour identifier les transactions de l'entité de service à charger.

24. Procédé selon l'une quelconque des revendications 14 à 22, dans lequel l'adresse IP numérique du service est utilisée pour générer l'identificateur de plateforme de service.

25. Procédé selon l'une quelconque des revendications précédentes, dans lequel l'adresse URL du service est utilisée pour identifier les transactions de l'entité de service à charger.

26. Procédé selon l'une quelconque des revendications 14 à 22, dans lequel l'adresse URL du service est utilisée pour générer l'identificateur de plateforme de service.

27. Procédé selon l'une quelconque des revendications précédentes, dans lequel un identificateur d'utilisateur est fixé sur le ticket de contenu.

28. Procédé selon la revendication 27, dans lequel l'identificateur d'utilisateur est le numéro ISDN international de l'abonné du téléphone mobile.

29. Procédé selon la revendication 27, dans lequel l'identificateur d'utilisateur est l'adresse IP identifiant le terminal d'abonné dans le réseau Internet.

30. Réseau de données, comprenant :
un serveur de contenu (108) d'un fournisseur de contenu qui a une connexion par Internet avec un noeud (104) d'une connexion de transmission de données utilisée par un fournisseur de connexion, à partir de laquelle il y a une connexion via une connexion de transmission de données (102) utilisée par le fournisseur de connexion avec un terminal d'abonné (100), tandis qu'il y a en plus une connexion avec un système d'informations de chargement (110) en partant du noeud (104) et que le noeud (104) comprend un moyen (144) pour identifier des transactions individuelles (138, 140) dans les données à transmettre au terminal d'abonné, **caractérisé en ce que** le réseau de données comprend en outre :
un moyen (146) pour identifier les transactions individuelles d'une entité de service à charger dans le système d'informations de chargement,
un moyen (146) pour générer, dans le système d'informations de chargement (110), un ticket de contenu pour chaque entité de service, et
un moyen (148) pour utiliser le ticket de contenu pour facturer l'entité de service.

31. Procédé selon la revendication 30, dans lequel le réseau de données est Internet.

32. Procédé selon la revendication 30, dans lequel le réseau de données est un système mobile employant le protocole d'application sans fil (WAP).

33. Réseau de données selon l'une quelconque des revendications précédentes, dans lequel il comprend des moyens (144, 146) que le fournisseur de connexion utilise pour générer des tickets spécifiques aux transactions (216, 218, 220, 222) en se basant sur les transactions.

34. Réseau de données selon l'une quelconque des revendications précédentes, dans lequel le système d'informations de chargement (110) est une passerelle de chargement WAP.

35. Réseau de données selon l'une quelconque des revendications précédentes, dans lequel le réseau comprend un moyen (146) que le fournisseur de connexion utilise pour générer un ticket de contenu en se basant sur les tickets de transaction (216, 218, 220, 222) générés en se basant sur les transactions individuelles.

36. Réseau de données selon l'une quelconque des revendications précédentes, dans lequel le réseau comprend :
un moyen (142) pour définir un identificateur de contenu identifiant une entité de service à charger, et
un moyen (142) pour transmettre au fournisseur de connexion l'identificateur de contenu associé à la transaction de l'entité de service à transmettre au terminal d'abonné.

37. Réseau de données selon l'une quelconque des revendications précédentes, dans lequel le réseau comprend un moyen (146) pour utiliser l'identificateur de contenu afin d'identifier la transaction de l'entité de service à charger.

38. Réseau de données selon l'une quelconque des revendications précédentes, dans lequel le réseau comprend un moyen (146) pour générer un ticket de contenu pour l'entité de service à charger en utilisant l'identificateur de contenu.

39. Réseau de données selon l'une quelconque des revendications précédentes, dans lequel le réseau comprend un moyen (142) que le fournisseur de contenu utilise pour générer l'identificateur de contenu associé aux transactions individuelles.

40. Réseau de données selon la revendication 39, dans lequel le réseau comprend un moyen (142) pour insérer l'identificateur de contenu dans les informations d'en-tête des transactions individuelles de l'entité de service.

41. Réseau de données selon la revendication 39, dans lequel le réseau comprend un moyen (142) pour insérer l'identificateur de contenu dans les informations d'en-tête http des transactions individuelles de l'entité de service.

42. Réseau de données selon les revendications 36 à 39, dans lequel le réseau comprend un moyen (142) pour transmettre l'identificateur de contenu identifiant l'entité de service séparée des données des transactions individuelles de l'entité de service.

43. Réseau de données selon l'une quelconque des revendications précédentes, le réseau comprend des moyens (142, 146) pour définir un identificateur de plateforme de service identifiant la plateforme du fournisseur de contenu.

44. Réseau de données selon la revendication 43, dans lequel le réseau comprend un moyen (142) que le fournisseur de contenu utilise pour générer l'identificateur de plateforme de service.

45. Réseau de données selon l'une quelconque des revendications 43 à 44, dans lequel le réseau comprend un moyen (142) pour transmettre au fournisseur de connexion l'identificateur de plateforme de service associé à la transaction de l'entité de service à transmettre au terminal d'abonné.

46. Réseau de données selon l'une quelconque des revendications 43 à 45, dans lequel le réseau comprend un moyen (146) que le fournisseur de connexion utilise pour générer l'identificateur de plateforme de service conjointement avec la transaction de l'entité de service à transmettre au terminal d'abonné.

47. Réseau de données selon l'une quelconque des revendications 43 à 46, dans lequel le réseau comprend un moyen (146) pour utiliser l'identificateur de plateforme de service pour identifier les transactions de l'entité de service à charger.

48. Réseau de données selon l'une quelconque des revendications 43 à 47, dans lequel le réseau comprend un moyen (146) pour utiliser l'identificateur de plateforme de service pour générer le ticket de contenu de l'entité de service à charger.

49. Réseau de données selon l'une quelconque des revendications 43 à 48, dans lequel le réseau comprend un moyen (142) pour insérer l'identificateur de plateforme de service dans les informations d'en-tête des transactions individuelles de l'entité de service.

50. Réseau de données selon l'une quelconque des revendications 43 à 49, dans lequel le réseau comprend un moyen (142) pour insérer l'identificateur de plateforme de service dans les informations d'en-tête http des transactions individuelles de l'entité de service.

51. Réseau de données selon l'une quelconque des revendications 43 à 48, dans lequel le réseau comprend un moyen (142) pour transmettre l'identificateur de plateforme de service séparément des données des transactions individuelles de l'entité de service.

52. Réseau de données selon l'une quelconque des revendications 30 à 51, dans lequel le réseau comprend un moyen (146) pour utiliser l'adresse IP numérique du service pour identifier les transactions de l'entité de service à charger.

53. Réseau de données selon l'une quelconque des revendications 43 à 51, dans lequel le réseau comprend un moyen (146) pour utiliser l'adresse IP numérique du service pour générer l'identificateur de plateforme de service.

54. Réseau de données selon l'une quelconque des revendications 30 à 53, dans lequel le réseau comprend un moyen (146) pour utiliser l'adresse URL du service afin d'identifier les transactions de l'entité de service à charger.

55. Réseau de données selon l'une quelconque des revendications 43 à 51, dans lequel le réseau comprend un moyen (146) pour utiliser l'adresse URL du service pour générer l'identificateur de plateforme de service.

56. Réseau de données selon l'une quelconque des revendications 30 à 55, dans lequel le réseau comprend un moyen (146) pour fixer un identificateur d'utilisateur au ticket de contenu.

57. Réseau de données selon la revendication 56, dans lequel l'identificateur d'utilisateur est le numéro ISDN international de l'abonné au téléphone mobile (MSISDN).

58. Réseau de données selon la revendication 56, dans lequel l'identificateur d'utilisateur est l'adresse IP identifiant le terminal d'abonné dans le réseau Internet.
